# EUROPÄISCHE PATENTANMELDUNG

(11) **EP 1 190 991 A1**
(43) Veröffentlichungstag der Anmeldung: **27.03.2002**
(21) Anmeldenummer: 00119743.3
(22) Anmeldetag: 09.09.2000
(51) Int. Cl.: C02F 3/06

(54) **Anlage zur Abwasserreinigung mit selbstregulierender Leistung**

(71) Anmelder: Kickuth, Reinhold, Prof. Dr., Neu-Eichenberg-Hermannrode (DE)
(72) Erfinder: Kickuth, Reinhold, Prof. Dr., Neu-Eichenberg-Hermannrode (DE)
(74) Vertreter: Weisse, Jürgen, Dipl.-Phys.

(57) **Zusammenfassung**

Die Anlage enthält einen Festbettreaktor (10) mit aktivem Bodenkörper (11), der unter Gefälle von einem Zulauf (5) zu einem Ablauf (7) verläuft und in Längsrichtung von dem in den Zulauf eingeleiteten Abwasser durchströmt wird. Oberhalb des aktiven Bodenkörpers (11) ist ein in den Festbettreaktor integriertes, im Längsschnitt keilförmiges Pufferbecken (13) zur Aufnahme von Schwankungen im Abwasserzufluß ausgebildet, welche die Durchflußleistung des aktiven Bodenkörpers (11) übersteigen. Der aktive Bodenkörper (11) ist mit emersen Helophyten bepflanzt, deren oberirdische Organe im Pufferbecken (13) angeordnet sind, das über eine Kontaktfläche (12) mit dem aktiven Bodenkörper (11) hydraulisch kommuniziert.

## Beschreibung

### Technisches Gebiet

Die Erfindung betrifft eine Anlage zur Abwasserreinigung mit einem Festbettreaktor mit aktivem Bodenkörper und mit einer Einrichtung zur Zwischenspeicherung von Abwasserzuflüssen, die eine vorgegebene Durchlußleistung des Festbettreaktors übersteigen.

Solche Abwasserreinigungsanlagen sind insbesondere an Boden oder bodenähnliches Material gebundene Systeme, die ihre Reinigungsaufgabe unter wechselnden hydraulischen Bedingungen zu erfüllen haben. Sie werden unter Begriffen wie "Wurzelraumanlagen", "Pflanzenkläranlagen", "bepflanzte Bodenkörper", "Root Zone Systems" oder "Constructed Wetlands" in der Literatur und in Patentschriften behandelt. Anlagen dieser Art gewinnen wegen ihrer Leistungsfähigkeit, auch bei der Reinigung von Sonderabwässern, aber auch wegen ihrer geringen Bau- und Betriebskosten zunehmend an Bedeutung.

Die spezifischen Flächenansprüche solcher Anlagen sind überraschend gering; sie liegen für kommunale Abwässer bei ca. 2 bis 7 m² pro Einwohnergleichwert (EGW) bei den üblichen gesetzlichen Reinigungsanforderungen. Bei extremen Anforderungen, aber auch für die Behandlung persistenter Stoffe (Halogenphenole, polycyclische Aromaten und Aliphaten, Nitroverbindungen u.a.) sind gegebenenfalls höhere spezifische Flächenansprüche zu erfüllen, jedoch werden auch solche Stoffe durch die komplexe Biologie solcher Anlagen abgebaut.

Das Kernproblem solcher Anlagen ist deren hydraulisches Leistungsvermögen. Das hängt mit der verhältnismäßig geringen Durchlässigkeit der Festbettreaktoren und deren Verminderung im Betrieb zusammen, denn die Maximalleistung dieser Anlagen wird durch ihre jeweilige hydraulische Durchflußleistung bestimmt. Es sind daher mit mehr oder weniger großem Erfolg zahlreiche Versuche unternommen worden, Festbettreaktoren mit günstigen Durchlässigkeitsbeiwerten (k_{F}-Werten) aufzubauen und deren Durchlässigkeit über lange Zeiten aufrechtzuerhalten, wodurch die Infiltrations- bzw. Strömungsquerschnitte und damit auch die Flächenansprüche solcher Anlagen günstiger gestaltet werden können.

Andere Vorschläge zielen auf eine Modifizierung der Anlagen selbst und ihrer Betriebsweise. So ist in dem USA-Patent 5,273,653, das am 18.12.1993 erteilt wurde, eine "artesische Unterbrückung" beschrieben, die durch eine zum Ablauf geneigte untere Begrenzung eine bessere Ausnutzung des Festbettreaktors erreicht. In einer Anlage der anfangs beschriebenen Art nach dem USA-Patent 5,673,218, das am 10.6.1997 erteilt wurde, ist eine Zufuhrsteuerung vorgesehen, die vorzugsweise bei getrennten Kanalisationssystemen einen selbstregelnden Ausgleich von Schwankungen im Abwasserzufluß erzielt. Das wird dadurch erreicht, daß beispielsweise der Zulauf des Festbettreaktors unmittelbar mit einem Pufferbecken verbunden wird, in dem Abwasserzuflüsse, welche die hydraulische Duchflußleistung des Festbettreaktors übersteigen, zwischengespeichert werden.

Durch die vorstehend beschriebenen Modifizierungen wird in der Tat eine beträchtliche Reduzierung der Infiltrations- bzw. Strömungsquerschnitte erreicht, die ansonsten für größere Anlagen bzw. höhere Durchflußleistungen baulich nicht mehr realisierbar sind. Wie ständig durch die Praxis bestätigt wird, reichen aber alle diese Maßnahmen bei diesen Anlagen trotz aller ihrer sonstigen Vorteile aus hydraulischen Gründen nicht aus, um solche Anlagen für extrem hohe Durchflußleistungen und erst recht für stark wechselnde Zuflüsse etwa bei Mischkanalisation mit vernünftigen Abmessungen zu dimensionieren und baulich zu verwirklichen.

### Offenbarung der Erfindung

Dementsprechend besteht die Aufgabe der Erfindung darin, eine Anlage der eingangs genannten Art zu schaffen, die es ermöglicht, solche Anlagen zu schaffen, die bei hohen Durchflußleistungen realisierbare bauliche Abmessungen besitzen und deren geforderte BSB-Abbauwerte weitgehend unabhängig von Schwankungen des Abwasserzuflusses eingehalten werden können.

Nach der Erfindung wird diese Aufgabe dadurch gelöst, daß die Einrichtung zur Zwischenspeicherung von Abwasserzuflüssen, welche die vorgegebene Durchflußleistung des Festbettreaktors übersteigen, ein in den Festbettreaktor integriertes, über dem aktiven Bodenkörper angeordnetes Pufferbecken ist.

Die Erfindung basiert zunächst auf der Überlegung, daß der sogenannte Trockenwetterfall mit einem Trockenwetterzufluß Q_{tw} auch bei sehr variablen Abwasserzuflüssen der normale Betriebszustand der Anlage ist, während beispielsweise ein Regenereignis bei Mischkanalisation durch Oberflächenabfüsse ein abflußwirksames Niederschlagsereignis darstellt, das für den Betrieb der Anlage eher die zeitliche Ausnahme ist. Infolgedessen wäre eine Anlage, deren wirksame Fläche A bzw. deren Infiltrations- oder Strömungsquerschnitt F auf den maximal zu übernehmenden Abwasserzufluß Qₘₐₓ ausgelegt ist, für den Trockenwetterfall bzw. Trockenwetterzufluß Q_{tw} und somit für den zeitlich vorherrschenden Betriebszustand extrem überdimensioniert. Das wäre keine wirksame, unter Umständen nicht einmal eine baulich realisierbare Lösung des Problems.

Aus abwassertechnischen und ökologischen Überlegungen wird behördlich von einer Anlage zur Reinigung des Abwassers aus einem Mischkanalisationssystem verlangt, daß die Anlage ein Vielfaches, meist das zweifache oder dreifache des Trockenwetterzuflusses Q_{tw} reinigt. Eine bodengebundene Anlage zum Beispiel für eine Gemeinde mit 1000 EGW hat dann unter bestimmten Vorgaben nach bekannten Verfahren die folgenden Dimensionen:

| | | |
|---|---|---|
| Für 3 Q_{tw} | wirksame Fläche | A = 3 156 m²; |
| | Infiltrationsquerschnitt | F = 127 m²; |
| für 2 Q_{tw} | wirksame Fläche | A = 2 808 m²; |
| | Infiltrationsquerschnitt | F = 85 m²; |
| für 1 Q_{tw} | wirksame Fläche | A = 2 000 m²; |
| | Infiltraionsquerschnitt | F = 42,2 m². |

Aus diesen Angaben wird deutlich, daß der Flächenanspruch um ca. 50% zunimmt, wenn man für den Abwasserzufluß von 1 Q_{tw} auf einen solchen von 3 Q_{tw} übergeht, daß aber die Erhöhung des Abwasserzuflusses einen weit größeren Einfluß auf den Infiltrationsquerschnitt hat, nämlich im gleichen Bereich eine Zunahme um ca. 300% bzw. auf das dreifache zur Folge hat. Eine solche Zunahme würde bereits an die Grenzen baulicher Realisierbarkeit und betriebstechnischer Beherrschung stoßen.

Die Erfindung beruht auf der weiteren Überlegung, daß die Dimensionierung auch so gewählt werden kann, daß sie die Dimensionen für den Trockenwetterzufluß Q_{tw} **über**schreitet, aber die Dimensionen für den Maximalfall **unter** schreitet. Wählt man also die Dimensionierung beispielsweise entsprechend 2 Q_{tw}, dann wäre die Anlage zwar für höhere Abwasserzuflüsse unterdimensioniert, aber für geringere Abwasserzuflüsse überdimensioniert und hätte für Abwasserzuflüsse zwischen 1 und 2 Q_{tw} freie Kapazitäten.

Es könnten dann alle Abwasserzuflüsse >2 Q_{tw} einem Zwischenspeicher zugeführt und bei Auftreten freier Kapazitäten an die Anlage abgegeben werden. Das wird häufig bei den sogenannten Regenrückhaltebecken verwirklicht. Dabei ist es aber dem technischen Gespür des Aufsichtspersonals überlassen, in welchem Umfang und wann das Abwasser aus dem Regenrückhaltebecken der Anlage zugeführt wird. Bei der Anlage nach dem vorgenannten USA-Patent 5,637,218 wird die Zuführung zwar automatisch bewirkt, indem das Pufferbecken mit dem Zulauf der Anlage kommuniziert, jedoch vergrößert sich dadurch die ganze Anlage um das Ausmaß des Pufferbeckens, wodurch erhebliche bauliche Probleme bei der Realisierung der Anlage auftreten können. Ein weiterer Nachteil der bekannten Anlage besteht darin, daß die ganze anfallende Abwassermenge durch den gesamten aktiven Bodenkörper der Anlage hindurch abgeleitet wird, auch wenn dies bei dem im Pufferbecken gespeicherten, aus Regenereignissen herrührenden Abwasser wegen der erheblich geringeren Belastung eigentlich nicht notwendig wäre.

In der erfindungsgemäßen Anlage werden diese Nachteile dadurch vermieden, daß das Pufferbecken in die Anlage integriert und über dem aktiven Bodenkörper angeordnet ist.

Die Selbstregulierung in der Anlage nach der Erfindung kommt dadurch zustande, daß der Ablauf aus dem Festbettreaktor durch zwei Vorgänge bestimmt wird, nämlich (1) durch die Entwicklung freier Kapazitäten nach Abklingen des Regenereignisses und (2) durch die Infiltrationsrate aus dem Pufferbecken in den Festbettreaktor bzw. dessen Bodenkörper, die von der Größe der Kontaktfläche zwischen dem Bodenkörper des Festbettreaktors und deren Permeabilität abhängt.

Vorteilhafterweise weist der aktive Bodenkörper eine Bepflanzung auf, deren oberirdische Organe im Pufferbecken angeordnet sind und einschließlich der daran befindlichen Mikroflora zur Reinigungsleistung des Pufferbeckens beitragen.

Bei der erfindungsgemäßen Anlage kann vorgesehen werden, daß der aktive Bodenkörper des Festbettreaktors unter einem vorgegebenen Gefälle vom Zulauf zum Ablauf verläuft und die Stauhöhe des Pufferbeckens in der gleichen Richtung zunimmt.

Ein Ausführungsbeispiel der Erfindung wird nachfolgend unter Bezugnahme auf die Zeichnungen näher erläutert.

### Kurze Beschreibung der Zeichnungen

- Figur 1: ist eine schematische Längsschnittdarstellung einer Anlage nach dem Stand der Technik; und
- Figur 2: ist eine schematische Längsschnittdarstellung einer Anlage nach der Erfindung.

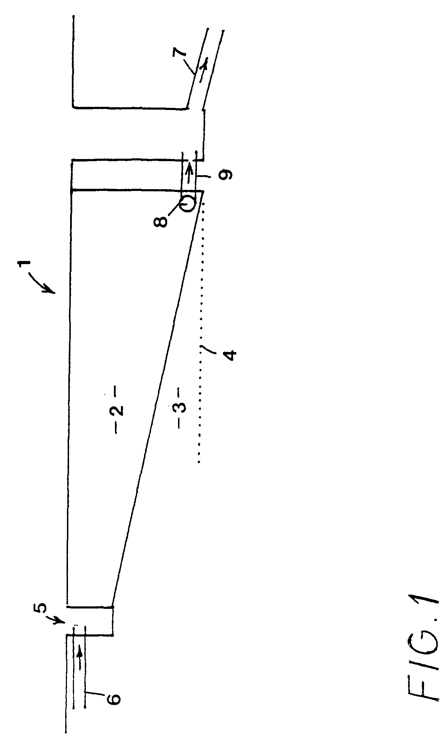

Die schematische Längsschnittdarstellung von Figur 1 zeigt eine vorbekannte Anlage zur Abwasserreinigung, die einen Festbettreaktor 1 mit einem aktiven Bodenkörper 2 enthält, der gegebenenfalls mit emersen Helophyten, beispielsweise *Phragmites australis* (Gemeines Rohrschilf) bepflanzt sein kann und in seiner Mächtigkeit so bemessen ist, daß er von den Pflanzen durchwurzelt ist. Unterhalb des Festbettreaktors 1 befindet sich ein Schotterbett 3, das dem Boden aufliegt. Beim Bau der Anlage ist der Festbettreaktor 1 von dem Schotterbett 3 und an den Seitenwänden vom Boden durch eine für das Abwasser undurchlässige Folie getrennt; eine solche Folie befindet sich auch zwischen dem Schotterbett 3 und dem Boden. Die Sohle des Festbettreaktors 1 verläuft unter einem Gefälle im Bereich von 1-5%; mit 4 ist die Horizontale bezeichnet.

An der Zulaufseite der Anlage befindet sich ein Zulauf 5, der als schottergefüllter Graben ausgeführt sein kann. Der Zulauf 5 erstreckt sich über die gesamte Breite der Anlage, die durch die baulichen Bedingungen für die vorgenannte Größe der Fläche A bestimmt ist; durch die Breite und Tiefe des Zulaufs 5 ist der Infiltrationsquerschnitt F des Festbettreaktors 1 gegeben. In den Zulauf 5 mündet eine Abwasserzuleitung 6. An der gegenüberliegenden Seite des Festbettreaktors 1 ist ein Ablauf 7 vorgesehen, der ebenfalls einen schottergefüllten Graben aurweisen kann. Ablaufseitig ist am Grunde des Festbettreaktors 1 ein Dränrohr 8 angelegt, dessen Ableitungen 9 in den Ablauf 7 münden. Der Ablauf 7 steht in Verbindung mit einem (nicht gezeigten) Vorfluter, der das gereinigte Abwasser aufnimmt.

### Bevorzugte Ausführung der Erfindung

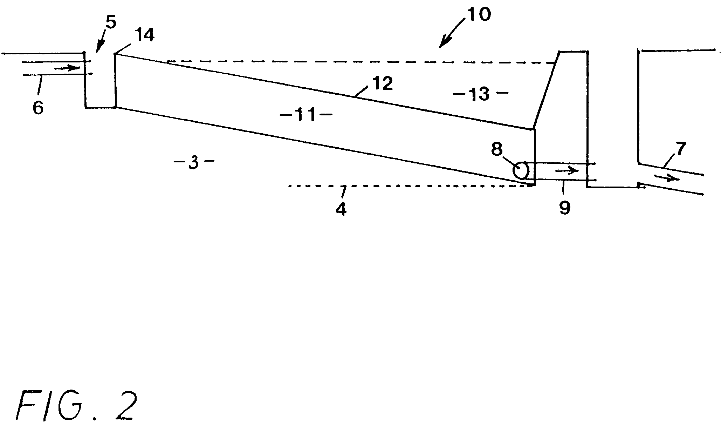

Die in Figur 2 ebenfalls im Längsschnitt dargestellte Anlage nach der Erfindung enthält entsprechend der Anlage nach Figur 1 auf einem Schotterbett einen Festbettreaktor 10 mit einem aktiven Bodenkörper 11, der in der dargestellten Ausfahrung beispielsweise ebenfalls mit (nicht gezeigtem) Gemeinen Rohrschilf bepflanzt ist. In den Festbettreaktor 10 führt ein Zulauf 5 mit einer Abwasserzuleitung 6; an der gegenüberliegenden Seite befindet sich am Grunde des Festbettreaktors 10 ein Dränrohr 8, das gereinigtes Abwasser aufnimmt und über Ablaufleitungen 9 einem Ablauf 7 zuführt, der mit einem Vorfluter verbunden ist. Insofern unterscheidet sich diese Anlage nicht grundsätzlich von der bekannten Anlage.

In der Anlage nach Figur 2 ist jedoch der Festbettreaktor 10 anders ausgebildet als der Festbettreaktor 1: Der aktive Bodenkörper 11 des Festbettreaktors 10, der eine Fließlänge von 20 m über einem Gefälle von 5% gegenüber der Horizontalen 4 hat, ist mit einer parallel zu seiner Sohle verlaufenden Kontaktfläche 12 versehen, sodaß der aktive Bodenkörper 11 des Festbettreaktors 10 vom Zulauf 5 zum Ablauf 6 unter einem internen Gefälle von 3% verläuft. Auf diese Weise wird oberhalb des Festbettreaktors 10 ein Pufferbekken 13 ausgebildet, das über einen Überlauf 14 mit dem Zulauf 5 in Verbindung steht und sich zum Ablauf 7 hin keilförmig bis zu einer Maximaltiefe von 1 m vertieft. Der aktive Bodenkörper 11 hat somit eine gleichförmige Mächtigkeit von ca. 0,6 m über seine gesamte Fließlänge und daher einen gleichförmigen Strömungsquerschnitt über seine gesamte Fließlänge. Diese Mächtigkeit ist an die übliche Durchwurzelungstiefe des Gemeinen Rohrschilfs angepaßt; im Betrieb wird das Pufferbecken 13 nur bis zu einer Stauhöhe von ca. 0,9 m gefüllt, was für die Bepflanzung ohne zeitliche Begrenzung sicher verträglich ist. Zusätzlich ist die Anlage nach Fig. 2 in bekannter Weise mit einem (nicht gezeigten) Notüberlauf versehen, durch den im Pufferbecken 13 anfallende überschüssige Zuflüsse zum Ablauf 7 abgeleitet werden.

Nachstehend sind die Daten für die Anlage nach Figur 2 angegeben. Die Anlage ist zur Reinigung des Abwassers einer Gemeinde mit 500 EGW dimensioniert.

| Abwassertechnische Daten: | |
|---|---|
| Der Trockenwetterzufluß Q_{tw} beträgt 150 l/d pro EGW entsprechend | 82,5 m³/d; |
| Übernahmepflicht im Regenfall: 3 Q_{tw} entsprechend | 247,5 m³/d; |
| Die Schmutzfracht beträgt 0,06 kg BSB₅/d pro EGW entsprechend | 30 kg /d; |
| nach mechanischer Vorreinigung: | 19,5 kg/d; |
| Zulaufkonzentration C₀ bei Trockenwetter | 236 mg/l, |
| Zulaufkonzentration C₀ bei 3 Q_{tw} | 79 mg/l; |
| Geforderte Ablaufkonzentration Cₜ | 10 mg/l. |

| Einrichtung der Anlage: | |
|---|---|
| I. Dimensionierung des Festbettreaktors 10 für 2 Q_{tw}: | |
| Fläche A: | 1562 m² |
| Breite B der Anlage | 76,3 m |
| Fließlänge L im aktiven Bodenkörper 11: | 20 m |
| Mächtigkeit H von 11 über die Fließlänge L | 0,6 m |
| Infiltrationsquerschnitt F = L x H = 76,3 x 0,6 | 45,8 m² |
| Durchlässigkeitsbeiwert k_{F} des aktiven Bodenkörpers 11 | 5 . 10⁻⁴ m/sec |
| Gesamtgefälle | 8 % |
| davon: Matrixgefälle des aktiven Bodenkörpers 11 | 3 % |
| Technisches Sohlgefälle | 5 % |

| II. Ausmaße des keilförmigen Pufferbeckens 13: | |
|---|---|
| Maximale Tiefe bzw. Stauhöhe | 0,9 m; |
| Breite | 76,3 m; |
| Länge | 18,0 m; |
| Verfügbares Speichervolumen | 618,0 m³; |
| Wirksame Oberfläche | 1373,0 m². |

Im Betrieb dieser Anlage wird das Pufferbecken 13 vom Zulauf 5 über den Überlauf 14 gefüllt, so lange der Abwasserzufluß den Trockenwetterzufluß von 2 Q_{tw} übersteigt, für den die Anlage ausgelegt ist. Geht der Abwasserzufluß wieder unter 2 Q_{tw} zurück, so entleert sich das Pufferbecken 13 über den aktiven Bodenkörper 11. Diese Entleerung erfolgt durch die Kontaktfläche 12 zwischen dem aktiven Bodenkörper 11 und dem Pufferbecken 13, für die ein Durchlässigkeitsbeiwert von k_{F} = 10⁻⁶ m/s angenommen ist.

Die tatsächlichen Entleerungsvorgänge sind kompliziert, weil die Entleerungsvorgänge durch den Bodenkörper 11 hindurch gleichzeitig sowohl vom Zulauf 5 her, als auch aus dem Pufferbecken 13 heraus erfolgen. Weiterhin werden sie durch die jeweilige Evapo-Transpiration über der Gesamtfläche des bepflanzten Bodenkörpers 2 beeinflußt, die gleichzeitig auch noch von der Jahreszeit und der Witterung abhängig ist und im Sommer 17 mm/d erreichen kann.

Den vorstehend angeführten Leistungsdaten der Anlage nach Figur 2 liegt weiter zugrunde, daß das Pufferbecken 13 nicht nur einen Volumenausgleich bewirkt, wenn die anfallenden Abwasserzuflüsse beispielsweise durch ein Regenereignis den Trockenwetterzufluß Q_{tw} übersteigen, sondern auch ein eigenes, definiertes Reinigungsvermögen besitzt. Dieses eigene Reinigungsvermögen des Pufferbeckens 13 addiert sich zum Reinigungsvermögen des aktiven Bodenkörpers 11 und ergänzt dieses in selbstregulierender Weise, indem die Größe der Oberfläche, durch die Sauerstoff in das im Pufferbecken 13 enthaltene Abwasser eintritt, mit dem Füllungszustand des Pufferbeckens 13 zunimmt. Dies ist eine Folge seiner keilförmigen Gestalt. Hinzukommt, daß die über dem Boden befindlichen Teile der Bepflanzung, auch durch die daran befindliche Mikroflora, ebenfalls zum Reinigungsvermögen des Pufferbeckens beiträgt, da die empfohlene Bepflanzung auch bei der maximalen Stauhöhe von 0,9 m in ihrer Funktion nicht beeinträchtigt wird.

In der vorstehend beschriebenen Anlage wird der Festbettreaktor 10 in Längsrichtung vom Zulauf 5 her und aus dem Pufferbecken 13 heraus durchströmt. Eine solche Anlage könnte auch für vertikal infiltrierte Bodenkörper vorgesehen werden. Vertikal durchströmte Anlagen als solche, also ohne ein Pufferbecken nach Art des in Fig. 2 dargestellten Pufferbeckens 13, sind an sich bekannt und auch baulich realisiert worden, sodaß sie hier nicht im einzelnen dargestellt und beschrieben werden müssen. Die vertikale Durchströmung bringt jedoch Probleme mit sich, die ihren allgemeinen Einsatz wenig ratsam erscheinen lassen. Folgende Problemfelder seien besonders erwähnt:
(1) Die Reinigungsstrecken sind extrem kurz und schließen daher nicht nur bakterielle Zonen (Katenen) aus, sondern sind auch geradezu durch Strömungskurzschlüsse gekennzeichnet;
(2) Die Anlagen erzwingen vollständige Benetzung der Infiltrationsfläche, sei es durch ein besonderes technisches Infiltrationssystem oder einen Dauerüberstau gleich welcher Schichtdicke.

Die erfindungsgemäße Ausbildung der Anlage zur Abwasserreinigung ist daher nur begrenzt auf vertikal infiltrierte Systeme anwendbar. Ein Hauptproblem dabei besteht darin, daß die gesamten Abwasserzuflüsse unabhängig vom jeweiligen Füllungszustand des Pufferbeckens durch das Pufferbecken eingeleitet werden müssen. Dadurch können Abwässer aller möglichen Konzentrationen in das Pufferbecken gelangen und unter Umständen zu entsprechenden Geruchsbelästigungen führen.
Bei der erfindungsgemäßen Anlage ist das sicher ausgeschlossen, denn es werden nur bei Regenereignissen anfallende, hochverdünnte Abwässer in das Pufferbecken 13 eingespeist.

Zu erwähnen ist auch, daß bei vertikal infiltrierten Anlagen eine stets gleichbleibende Oberfläche für den Sauerstoffeintrag zur Verfügung steht, die bei höher belasteten Abwässern nicht immer für einen befriedigenden BSB/CSB-Abbau ausreicht. Es fehlt daher eine Rückkopplung zwischen der Leistungsanforderung und der Größe der Oberfläche für den zusätzlichen Sauerstoffbedarf. Hingegen wird in der erfindungsgemäß ausgebildeten Anlage gemäß Fig. 2 durch den Sauerstoffeintrag in das Pufferbecken 13 eine die Reinigungsleistung der Anlage zusätzlich ergänzende Reinigungskapazität zur Verfügung gestellt. Problemlos ist daher die erfindungsgemäße Ausbildung der Anlage bei vertikaler Infiltration eigentlich nur für Nachreinigungsaufgaben oder für die Behandlung von Oberflächenabflüssen einzusetzen.

## Patentansprüche

1. Anlage zur Abwasserreinigung mit einem Festbettreaktor (1,10) mit aktivem Bodenkörper (2,11) und mit einer Einrichtung zur Zwischenspeicherung von Abwasserzuflüssen, die eine vorgegebene Durchlußleistung des Festbettreaktors (1,10) übersteigen,
**dadurch gekennzeichnet, daß** die Einrichtung zur Zwischenspeicherung von Abwasserzuflüssen, welche die vorgegebene Durchflußleistung des Festbettreaktors (10) übersteigen, ein in den Festbettreaktor (10) integriertes, über dem aktiven Bodenkörper (11) angeordnetes Pufferbecken (13) ist.

2. Anlage nach Anspruch 1, **dadurch gekennzeichnet, daß** der Festbettreaktor (10) für einen vorgegebenen Abwasserzufluß ausgelegt ist, der unter dem möglichen Maximalzufluß liegt.

3. Anlage nach Anspruch 1 oder 2, **dadurch gekennzeichnet, daß** der aktive Bodenkörper in Längsrichtung durchströmt wird.

4. Anlage nach einem der Ansprüche 1 bis 3, **dadurch gekennzeichnet, daß** der aktive Bodenkörper (11) unter einem vorgegebenen Gefälle vom Zulauf (5) zum Ablauf (7) verläuft und die Stauhöhe des Pufferbeckens (13) in der gleichen Richtung zunimmt.

5. Anlage nach einem der Ansprüche 1 bis 4, **dadurch gekennzeichnet, daß** die Stauhöhe des Pufferbeckens (13) geringer ist als der Vertikalabstand zwischen einem Dränrohr (8) des Ablaufs (7) und einem Überlauf (14) am Zulauf (5) des Festbettreaktors (10).

6. Anlage nach einem der vorstehenden Ansprüche, **dadurch gekennzeichnet, daß** der aktive Bodenkörper (11) eine Bepflanzung aufweist, deren oberirdische Organe im Pufferbecken (13) angeordnet sind und einschließlich der daran befindlichen Mikroflora zur Reinigung des Abwassers im Pufferbecken beitragen.

7. Anlage nach Anspruch 6, **dadurch gekennzeichnet, daß** die Bepflanzung aus emersen Helophyten ausgewählt ist.

8. Anlage nach Anspruch 6 oder 7, **dadurch gekennzeichnet, daß** das Pufferbecken (13) eine Maximaltiefe aufweist, bei welcher die Toleranz der Bepflanzung für Dauerüberstau nicht überschritten ist.

9. Anlage nach einem der Ansprüche 6 bis 8, **dadurch gekennzeichnet, daß** der Festbettreaktor (10) die Mächtigkeit des aktiven Bodenkörpers (11) die maximale Durchwurzelung der Bepflanzung nicht wesentlich überschreitet.
